# EUROPEAN PATENT APPLICATION

(11) **EP 4 501 847 A1**
(43) Date of publication of application: **05.02.2025**
(21) Application number: 23780646.8
(22) Date of filing: 29.03.2023
(51) Int. Cl.: C01B 32/194

(54) **CARBON COMPOSITE MATERIAL AND DISPERSION LIQUID**

(30) Priority: 30.03.2022 JP 2022056852
(71) Applicant: Kyocera Corporation, Kyoto-shi, Kyoto 612-8501 (JP)
(72) Inventor: MATSUMOTO, Ryo, Kyoto-shi, Kyoto 612-8501 (JP)
(74) Representative: Viering, Jentschura & Partner mbB Patent- und Rechtsanwälte
(86) International application number: PCT/JP2023/012728
(87) International publication number: WO 2023/190637

(57) **Abstract**

Disclosed is a carbon composite material including: a carbon material; and a modifying group introduced into the carbon material. When the carbon composite material is dispersed at a concentration of 0.3 mass% in a mixed solvent of deionized water and 2-propanol at a volume ratio of the deionized water:2-propanol = 6:4, an electrical conductivity of the dispersion liquid at 25°C is from 0.05 to 100.00 µS/cm.

## Description

### TECHNICAL FIELD

The present disclosure relates to a carbon composite material and a dispersion liquid in which the carbon composite material is dispersed.

### BACKGROUND OF INVENTION

Carbon materials have attracted considerable attention. For example, graphene is a substance containing a two-dimensional crystal including carbon atoms, and has excellent electrical, thermal, optical, and mechanical properties. Graphene is expected to have a broad range of applications in regions such as graphene-based composite materials, nanoelectronics, flexible/transparent electronics, supercapacitors, batteries, hydrogen storage, nanomedicine, and bioengineered materials.

In order for graphene to exhibit the above-described effect, graphite needs to be exfoliated into a graphene state. However, even if graphite is once exfoliated into the graphene state, graphene may be re-aggregated.
As a method for preventing re-aggregation of graphene, a method is known in which an alkali metal is intercalated between layers of graphene and the graphene surface is coated with an organic halogen compound (see Patent Document 1). As another method, a method is known in which an oxygen-containing group is introduced onto a surface of a carbon material to form graphene oxide (see Patent Document 2).

### CITATION LIST

### PATENT DOCUMENT

Patent Document 1: JP 2017-019695 A
Patent Document 2: JP 2013-212948 A

### SUMMARY

That is, the present disclosure relates to the following.

A composite material of the present disclosure is a carbon composite material. The carbon composite material includes a carbon material and a modifying group introduced into the carbon material. In this carbon composite material, when the carbon composite material is dispersed in a mixed solvent of deionized water and 2-propanol at a volume ratio of deionized water:2-propanol = 6:4 at a concentration of 0.3 mass%, an electrical conductivity of the dispersion liquid at 25°C is from 0.05 to 100.00 µS/cm.

The dispersion liquid of the present disclosure is obtained by dispersing the carbon composite material of the present disclosure in a dispersion medium.

### DESCRIPTION OF EMBODIMENTS

In the method described in Patent Document 1, in order to obtain an aggregation preventing effect by causing an organohalogen compound to act as a steric obstacle, it is necessary to coat a halogen compound as an impurity in order to obtain a sufficient aggregation preventing effect. Thus, the above-described effect of the graphene cannot be sufficiently obtained, and the application is also limited. In the method described in Patent Document 2, the graphene surface is oxidized to increase the number of structural defects, and the above-described effect of the graphene cannot be sufficiently obtained.

The present disclosure provides a carbon composite material which has good dispersibility when formed into a dispersion liquid and good dispersibility after long-term storage and is less likely to re-aggregate, and a dispersion liquid in which the carbon composite material is dispersed.

Hereinafter, the present disclosure will be described in detail with reference to an embodiment.

In the present description, wording of "from XX to YY" refers to "XX or more and YY or less". In the present description, with regard to numerical ranges (e.g., ranges such as content), lower and upper limit values described in a stepwise manner may each be independently combined. In a numerical range described herein, the upper or lower limit value of the numerical range may be replaced by a value presented in the examples.

In the present description, "graphene" means a "sheet-shaped substance containing sp2-bonded carbon atoms and having 50 or fewer layers".

### Carbon composite material

The carbon composite material of the present disclosure includes a carbon material and a modifying group introduced into the carbon material. In this carbon composite material, when the carbon composite material is dispersed at a concentration of 0.3 mass% in a mixed solvent of deionized water and 2-propanol at a volume ratio of the deionized water:2-propanol = 6:4, an electrical conductivity of the dispersion liquid at 25°C is from 0.05 to 100.00 µS/cm. When the electrical conductivity is 0.05 µS/cm or more, dispersibility of the carbon composite material in a solvent is good, and the carbon composite material is less likely to re-aggregate. When the electrical conductivity is 100.00 µS/cm or less, the dispersibility of the carbon composite material in a solvent is good, and the carbon composite material is less likely to re-aggregate. From such a viewpoint, the electrical conductivity may be from 0.1 to 90.00 µS/cm, from 1.0 to 80.00 µS/cm, from 1.5 to 70.00 µS/cm, or from 2.0 to 25.0 µS/cm.

The electrical conductivity can be set within the above range by appropriately adjusting the properties of the carbon material of the raw material, the kind of the water-soluble salt, a blending ratio of the carbon material and the water-soluble salt, and mixing and pulverizing conditions.

The electrical conductivity can be measured by an electrical conductivity meter. Specifically, the measurement can be measured by the method described in Examples.

The carbon composite material of the present disclosure includes a carbon material and a modifying group introduced into the carbon material.

The carbon material is not particularly limited. Examples of the carbon material include graphite, natural graphite, artificial graphite, scale-like graphite, expanded graphite, pyrolytic graphite, graphene, and carbon nanotubes. The carbon material may be graphene or graphite that becomes graphene in the dispersion liquid from the viewpoint of dispersibility.

The graphene is a sheet-shaped substance having a hexagonal lattice structure in which carbon atoms are bonded. The graphene may be in a state of a single layer having a layer thickness corresponding to one carbon atom, may be in a state of a multilayer of 2 layers or more and 50 layers or less, may be in a state of a multilayer of 20 layers or less, or may be in a state of a multilayer of 10 layers or less.

The content of carbon atoms in the graphene is not particularly limited, and may be 95 mass% or more, 99 mass% or more, or 100 mass%.

The content of impurities in the graphene is not particularly limited, and may be 5 mass% or less, 1 mass% or less, or 0 mass%.

The thickness of the graphene may be from 0.3 to 15.0 nm, from 0.3 to 12.0 nm, or from 0.5 to 7.0 nm from the viewpoint of dispersibility.

The term "thickness" as used herein refers to the thickness of one layer in the case of a single layer, and refers to the thickness of the entire layer in the case of a multilayer.

The thickness of the graphene can be measured using, for example, an atomic force microscope.

The modifying group is a modifying group that can be introduced into the carbon material, and is not particularly limited as long as the electrical conductivity of the dispersion liquid is within the above range. The modifying group may contain at least an anionic functional group or may include an anionic functional group and a counter cation of the anionic functional group from the viewpoint of making the carbon composite material less likely to be re-aggregated.

In the modifying group, the anionic functional group of the modifying group is bonded to the carbon material, and the counter cation is attracted around the negatively charged carbon material.

In the carbon composite material having a modifying group including an anionic functional group and a counter cation of the anionic functional group, the counter cation is dissociated in a solvent. Thereby, an electrostatic repulsive force acts between the carbon material to which the anionic functional group is bonded and any anion, so that the carbon composite material of the present disclosure is easily dispersed in the solvent. Therefore, the carbon composite material of the present disclosure has good dispersibility when formed into a dispersion liquid dispersed in a solvent, has good dispersibility after long-term storage, and is less likely to re-aggregate.

When the carbon composite material is dispersed in a mixed solvent in which the volume ratio of deionized water and 2-propanol is deionized water:2-propanol = 6:4, the electrical conductivity of the dispersion liquid at 25°C can be considered as an index of the electrostatic repulsive force. When the modifying group includes an anionic functional group and a counter cation of the anionic functional group, it is considered that when the electrical conductivity is 0.05 µS/cm or more, the carbon composite material contains a modifying group in such an amount that a sufficient amount of the counter cation can be released into the dispersion liquid. As a result, the electrostatic repulsive force between the anions is sufficiently exerted. Here, the amount of the counter cation released into the dispersion liquid varies depending on the ease of release of the counter cation in the modifying group into the dispersion liquid. Similarly, when the electrical conductivity is 100.00 µS/cm or less, it is considered that the carbon composite material contains a modifying group in an amount that does not excessively release a counter cation into the dispersion liquid. As a result, the electrostatic repulsive force between the anions is maintained.

From the viewpoint of the amount of cations released into the dispersion liquid, when the anionic functional group is a hydroxyl group and/or when the cation is a hydrogen ion, there is a possibility that the electrical conductivity is not within the above range of the electrical conductivity. From the viewpoint of the amount of cations released into the dispersion liquid, when the carbon material in the carbon composite material contains a hydroxyl group, a carbonyl group, or a hydroxyl group and a carbonyl group, there is a possibility that the electrical conductivity is not included within the above range of the electrical conductivity.

The anionic functional group included in the modifying group may be at least one selected from the group consisting of a carboxy group, a carbonic acid group, a sulfonic acid group, and a phosphate group, or may be a carboxy group or a carbonic acid group, from the viewpoint of dissociability of the counter cation of the anionic functional group.

The counter cation included in the modifying group may be at least one selected from the group consisting of a potassium ion, a sodium ion, a lithium ion, a barium ion, a calcium ion, a magnesium ion, a rubidium ion, and an ammonium ion, or may be a potassium ion, a lithium ion, or a sodium ion from the viewpoint of ionization tendency.

When the modifying group includes an anionic functional group and a counter cation of the anionic functional group, the concentration of the counter cation contained in the carbon composite material of the present disclosure may be from 50 to 15000 ppm by mass, from 100 to 10000 ppm by mass, or from 1000 to 4000 ppm by mass. When the concentration of the counter cation is 50 ppm by mass or more, the dispersibility of the carbon composite material in the solvent can be further enhanced, and when the concentration of the counter cation is 15000 ppm by mass or less, the action of the electrostatic repulsive force acting between the carbon material having an anionic functional group bonded thereto in the solvent and any anion is enhanced. Thus, the carbon composite material of the present disclosure can further maintain a state of being dispersed in the solvent.

The concentration of the counter cation contained in the carbon composite material can be measured by ICP-OES (Inductively Coupled Plasma Optical Emission Spectrometer) and ICP-MS(Inductively Coupled Plasma Mass Spectrometry). Specifically, the measurement can be made by the method described in Examples.

When the carbon composite material of the present disclosure is dispersed at a concentration of 0.3 mass% in a mixed solvent of deionized water and 2-propanol at a volume ratio of the deionized water:2-propanol = 6:4, a pH of the dispersion liquid at 25°C may be from 5.1 to 8.6, from 5.1 to 8.5, from 5.1 to 8.4, from 5.1 to 8.3, from 5.5 to 8.1, or from 6.0 to 8.0.

When the carbon composite material contains a modifying group including an anionic functional group and a counter cation of the anionic functional group, when the pH is within the above range, the counter cation is easily dissociated in the solvent, and the anionic functional group is easily charged. As a result, the electrostatic repulsive force acts between the carbon composite material containing the anionic functional group and an arbitrary anion, so that the carbon composite material of the present disclosure has further improved dispersibility in the solvent and is less likely to re-aggregate.

The pH can be set within the above range by appropriately adjusting the properties of the carbon material of the raw material, the kind of the water-soluble salt, a blending ratio of the carbon material and the water-soluble salt, and mixing and pulverizing conditions. From the viewpoint of maintaining the pH at 5.1 or more, the carbon material in the carbon composite material may be a carbon material containing no hydroxyl group.

The pH can be measured with a pH measuring instrument. Specifically, the measurement can be made by the method described in Examples.

### Method for producing carbon composite material

Examples of a method for producing the carbon composite material of the present disclosure include a method in which a water-soluble salt is added to graphite and mixed in a dry or paste form, and the resulting mixture is washed with a washing liquid. The anions liberated from the water-soluble salt are bonded to graphite and incorporated into the graphite, thereby promoting exfoliation and pulverization of the graphite. For example, another method includes a method in which an organic acid such as acetic acid or citric acid is added to graphite and mixed in a wet manner, the cation of the organic acid is substituted with a cation of a water-soluble salt, and the excess water-soluble salt is washed with a washing liquid. The anions liberated from the organic acid are bonded to graphite and incorporated into the graphite. When the cation of the organic acid is substituted with the cation of the water-soluble salt, exfoliation and pulverization of graphite similar to the dry form are promoted.

In the present disclosure, the term "pulverization" is not limited to crushing and disassembly for downsizing as compared with the carbon material used as a raw material, and includes simply loosening the aggregation of the carbon material.

As the carbon material, those described above can be used.

The water-soluble salt is not particularly limited as long as it is a salt soluble in water. Specific examples of the water-soluble salt include tripotassium citrate, potassium tartrate, potassium acetate, potassium formate, potassium glutamate, potassium carbonate, tripotassium phosphate, and potassium methanesulfonate. Salts in which potassium of these water-soluble salts is changed to sodium, lithium, barium, calcium, magnesium, rubidium, and ammonium can be exemplified. One type of the water-soluble salts may be used, or two or more types may be used in combination.

The blending amount of the water-soluble salt may be from 1 to 500 parts by mass, from 10 to 400 parts by mass, or from 100 to 300 parts by mass with respect to 100 parts by mass of the carbon material. When the blending amount of the water-soluble salt is 1 part by mass or more, the dispersibility in a solvent is improved by production of the carbon composite material, and when the blending amount is 500 parts by mass or less, excessive reaction and adsorption of the water-soluble salt can be reduced.

The environmental conditions when the water-soluble salt and the carbon material are mixed and pulverized are not particularly limited. The water-soluble salt and the carbon material may be mixed in air at normal temperature (25°C), or may be mixed under a nitrogen atmosphere or an inert gas environment such as argon. The mixing may be performed at a high temperature or a low temperature as necessary. Further, the mixing may be performed under a pressurized environment or a depressurized environment. Furthermore, the mixing may be performed in the presence of a solvent and the like.

As a pulverizing device, a known device can be used without limitation. Examples thereof include dry pulverizing devices such as a ball mill, a bead mill, a jet mill, a hammer mill, and a high-speed stirrer. The treatment conditions and the like may be appropriately adjusted according to the type, size, and the like of the carbon material.

After mixing the water-soluble salt and the carbon material, the resulting mixture may be washed. As a result, excess water-soluble salt is removed. The washing liquid to be used for washing is not particularly limited as long as it can remove excessive water-soluble salt. The washing liquid may be ion-exchanged water, distilled water, pure water, or ultrapure water.

The amount of the washing liquid to be added at the time of washing is not particularly limited as long as it is an amount sufficient to obtain a suspension. For example, a washing liquid having a mass from 10 to 10000 times a total mass of the water-soluble salt and the carbon material may be added, mixed and stirred. At the time of washing, heating may be performed as necessary. The number of times of washing may be, for example, from 2 to 10 times or from 2 to 8 times. The washing conditions may be suitable set according to the type of carbon material and water-soluble salt to be used, and the like. Washing is performed to obtain a carbon composite material having a modifying group.

After washing, a filter may be used for each filtration. The pore size of the filter is selected depending on the use of the carbon composite material to be obtained. The obtained carbon composite material may be dried and taken out as a powder, or may be dispersed in a liquid or used as a paste. Drying can be performed by any method. For example, the carbon composite material can be dried by a spray drying method.

### Dispersion liquid

The dispersion liquid of the present disclosure is obtained by dispersing the carbon composite material described above in a dispersion medium. The dispersion liquid of the present disclosure may contain the above-described carbon material to which the anionic functional group is bonded.

The dispersion medium is not particularly limited as long as it disperses the carbon composite material, and may be a polar solvent. A polar solvent is not particularly limited, and examples include water, methanol, ethanol, 1-propanol, 2-propanol (isopropyl alcohol (IPA)), butanol, acetone, acetonitrile, tetrahydrofuran, dimethyl sulfoxide, dimethylacetamide, N,N-dimethylformamide, and N-methylpyrrolidone. One type of the polar solvents may be used, or two or more types may be used in combination. Among these, from the perspective of miscibility with the carbon composite material, any of water, methanol, ethanol, 1-propanol, 2-propanol, N-methylpyrrolidone, N,N-dimethylformamide, and a mixed solvent of at least two types of these may be selected. A mixed solvent containing water and an alcohol may be selected, and a mixing ratio (volume ratio) of water to 2-propanol may be selected from 50/50 to 70/30.

The pH of the dispersion medium at 25°C may be from 4.8 to 10.0, from 4.9 to 9.5, or from 5.0 to 9.0 from the viewpoint of dissociation of the anionic functional group and counter cation dissociation of the anionic functional group. When the pH of the dispersion medium is 4.8 or more, dissociation of the anionic functional group is promoted, and when the pH of the dispersion medium is 10.0 or less, dissociation of the counter cation of the anionic functional group is promoted.

The pH can be measured with a pH measuring instrument. Specifically, the measurement can be measured by the method described in Examples.

The electrical conductivity of the dispersion medium at 25°C may be 70.0 µS/cm or less, 51.0 µS/cm or less, from 0.1 to 50.0 µS/cm, from 0.2 to 20.0 µS/cm, or from 0.3 to 10.0 µS/cm from the viewpoint of an electrostatic repulsive force action acting between the dispersion particles and arbitrary ions.

The electrical conductivity can be measured by an electrical conductivity meter. Specifically, the measurement can be measured by the method described in Examples.

The dispersion medium may have a pH at 25°C of from 4.8 to 10.0 and an electrical conductivity at 25°C of 70.0 µS/cm or less, a pH at 25°C of from 4.9 to 9.5 and an electrical conductivity at 25°C of 51.0 µS/cm or less, or a pH at 25°C of from 5.0 to 9.0 and an electrical conductivity at 25°C of 70.0 µS/cm or less.

The pH and the electrical conductivity of the dispersion medium at 25°C can be adjusted within the above respective ranges by appropriately adding inorganic acids such as sulfuric acid and hydrochloric acid; organic acids such as acetic acid and citric acid; hydroxides of alkali metals such as sodium hydroxide and potassium hydroxide; ammonia, and the like.

### Other components

The dispersion liquid of the present disclosure may include other components. The other components are not particularly limited, and the dispersion liquid may contain a nanofiller; an additive such as a thickener, a viscosity modifier, a resin, a curing agent, a flame retardant, and a UV absorber, and the like.

The dispersion liquid can be prepared by adding the carbon composite material, an additive added as necessary, and the like to the dispersion medium, and sufficiently stirring the mixture manually or with a stirrer.

The solid content concentration of the dispersion liquid of the present disclosure may be from 0.1 to 35.0 mass%, from 1.0 to 30.0 mass%, or from 3.0 to 20.0 mass% based on a total amount (100 mass%) of the dispersion liquid. When the solid content concentration is 0.1 mass% or more, characteristics can be imparted by the dispersed carbon composite material, and when the solid content concentration is 35.0 mass% or less, the carbon composite material can be easily redispersed.

In the present disclosure, the "solid content concentration" refers to the content (concentration) of components other than the dispersion medium.

The content of the carbon composite material in the solid content may be from 0.1 to 25.0 mass%, from 0.5 to 20.0 mass%, or from 1.0 to 15.0 mass% from the viewpoint of achieving high dispersibility and long-term dispersibility.

### Intended use

Examples of applications of the carbon composite material of the present disclosure include conductive composites, electronic members such as electrodes, building materials, paints, medical devices, and heat dissipation materials.

### EXAMPLE

The present disclosure will be specifically described through examples; however, the present disclosure is not limited in any way to these examples.

### First example: carbon composite material

### Example 1-1

Under normal temperature (25°C), 1.0 g of natural graphite (CB-100, available from Nippon Graphite Industries, Co., Ltd., average particle size: 80 µm) and 2.0 g of tripotassium citrate were mixed in a nitrogen atmosphere, and the mixture was mixed and stirred for 30 minutes by a ball mill (available from Fritsch GmbH, model: P-6, ball diameter: 20 mm, rotation speed: 500 rpm). Subsequently, the resultant was washed with ion-exchanged water, then filtered, and dried at 60°C to obtain a carbon composite material.

The thickness of the obtained carbon composite material was measured by an atomic force microscope (available from Hitachi High-Tech Corporation, model: AFM5300E). As a result, it was confirmed that the thickness was 1.2 nm, the number of graphene layers was equivalent to 3 or less, and the natural graphite was crushed into graphene.

### Example 1-2

Under normal temperature (25°C), 1.0 g of natural graphite (F#2, available from Nippon Graphite Industries, Co., Ltd., average particle size: 130 µm) and 2.0 g of sodium carbonate were mixed in a nitrogen atmosphere, and the mixture was mixed and stirred for 30 minutes by a ball mill (available from Fritsch GmbH, model: P-6, ball diameter: 20 mm, rotation speed: 500 rpm). Subsequently, the resultant was washed with ion-exchanged water, then filtered, and dried at 60°C to obtain a carbon composite material.

### Example 1-3

Under normal temperature (25°C), 1.0 g of natural graphite (F#2, available from Nippon Graphite Industries, Co., Ltd., average particle size: 130 µm) and 2.0 g of lithium acetate were mixed in a nitrogen atmosphere, and the mixture was mixed and stirred for 30 minutes by a ball mill (available from Fritsch GmbH, model: P-6, ball diameter: 20 mm, rotation speed: 500 rpm). Subsequently, the resultant was washed with ion-exchanged water, then filtered, and dried at 60°C to obtain a carbon composite material.

### Example 1-4

Under normal temperature (25°C), 1.0 g of natural graphite (F#1, available from Nippon Graphite Industries, Co., Ltd., average particle size: 350 µm) and 2.0 g of lithium acetate were mixed in a nitrogen atmosphere, and the mixture was mixed and stirred for 30 minutes by a ball mill (available from Fritsch GmbH, model: P-6, ball diameter: 10 mm, rotation speed: 500 rpm). Subsequently, the resultant was washed with ion-exchanged water, then filtered, and dried at 60°C to obtain a carbon composite material.

### Example 1-5

Under normal temperature (25°C), 1.0 g of natural graphite (XD100, available from Ito Graphite Co., Ltd., average particle size: from 200 to 300 µm) and 2.0 g of tripotassium citrate were mixed in a nitrogen atmosphere, and the mixture was mixed and stirred for 30 minutes by a ball mill (available from Fritsch GmbH, model: P-6, ball diameter: 20 mm, rotation speed: 500 rpm). Subsequently, the resultant was washed with ion-exchanged water, then filtered, and dried at 60°C to obtain a carbon composite material.

### Example 1-6

Under normal temperature (25°C), 1.0 g of natural graphite (XD150, available from Ito Graphite Co., Ltd., average particle size: from 150 to 200 µm) and 2.5 g of tripotassium citrate were mixed in a nitrogen atmosphere, and the mixture was mixed and stirred for 30 minutes by a ball mill (available from Fritsch GmbH, model: P-6, ball diameter: 20 mm, rotation speed: 500 rpm). Subsequently, the resultant was washed with ion-exchanged water, then filtered, and dried at 60°C to obtain a carbon composite material.

### Example 1-7

Under normal temperature (25°C), 1.0 g of expanded graphite (EC100, available from Ito Graphite Co., Ltd., average particle size: from 170 to 230 µm) and 2.5 g of lithium acetate were mixed in a nitrogen atmosphere, and the mixture was mixed and stirred for 30 minutes by a ball mill (available from Fritsch GmbH, model: P-6, ball diameter: 20 mm, rotation speed: 500 rpm). Subsequently, the resultant was washed with ion-exchanged water, then filtered, and dried at 60°C to obtain a carbon composite material.

### Example 1-8

Under normal temperature (25°C), 1.0 g of natural graphite (XD100, available from Ito Graphite Co., Ltd., average particle size: from 200 to 300 µm) and 2.0 g of trisodium citrate were mixed in a nitrogen atmosphere, and the mixture was mixed and stirred for 40 minutes by a ball mill (available from Fritsch GmbH, model: P-6, ball diameter: 20 mm, rotation speed: 500 rpm). Subsequently, the resultant was washed with ion-exchanged water, then filtered, and dried at 60°C to obtain a carbon composite material.

### Example 1-9

Under normal temperature (25°C), 1.0 g of natural graphite (XD100, available from Ito Graphite Co., Ltd., average particle size: from 200 to 300 µm) and 2.0 g of potassium formate were mixed in a nitrogen atmosphere, and the mixture was mixed and stirred for 40 minutes by a ball mill (available from Fritsch GmbH, model: P-6, ball diameter: 20 mm, rotation speed: 500 rpm). Subsequently, the resultant was washed with ion-exchanged water, then filtered, and dried at 60°C to obtain a carbon composite material.

### Example 1-10

Under normal temperature (25°C), 1.0 g of expanded graphite (EC100, available from Ito Graphite Co., Ltd., average particle size: from 170 to 230 µm) and 2.5 g of trilithium citrate were mixed in a nitrogen atmosphere, and the mixture was mixed and stirred for 40 minutes by a ball mill (available from Fritsch GmbH, model: P-6, ball diameter: 20 mm, rotation speed: 500 rpm). Subsequently, the resultant was washed with ion-exchanged water, then filtered, and dried at 60°C to obtain a carbon composite material.

### Comparative Example 1-1

Under normal temperature (25°C), 1.0 g of natural graphite (Z+50, available from Ito Graphite Co., Ltd., particle size +50 mesh 75% or more) and 5.0 g of lithium acetate were mixed in a nitrogen atmosphere, and the mixture was mixed and stirred for 30 minutes by a ball mill (available from Fritsch GmbH, model: P-6, ball diameter: 10 mm, rotation speed: 500 rpm). Subsequently, the resultant was washed with ion-exchanged water, then filtered, and dried at 60°C to obtain a carbon composite material.

### Comparative Example 1-2

Under normal temperature (25°C), 1.0 g of natural graphite (Z-5F, available from Ito Graphite Co., Ltd., average particle size: 4 µm) and 5.0 g of sodium carbonate were mixed in a nitrogen atmosphere, and the mixture was mixed and stirred for 30 minutes by a ball mill (available from Fritsch GmbH, model: P-6, ball diameter: 10 mm, rotation speed: 500 rpm). Subsequently, the resultant was washed with ion-exchanged water, then filtered, and dried at 60°C to obtain a graphite powder.

### Comparative Example 1-3

Under normal temperature (25°C), 1.0 g of natural graphite (XD100, available from Ito Graphite Co., Ltd., average particle size: from 200 to 300 µm) was stirred in a nitrogen atmosphere for 30 minutes by a ball mill (available from Fritsch GmbH, model: P-6, ball diameter: 10 mm, rotation speed: 500 rpm) to obtain a graphite powder.

### Comparative Example 1-4

Graphene nanoplatelets (xGnP R10, available from XG Sciences, Inc., average particle size: 10 µm) were used as a carbon material.

### Comparative Example 1-5

Graphene oxide (FD-PURE-GO series, available from NSC Co., Ltd., average particle size: 3.6 µm) was used as a carbon material.

### Comparative Example 1-6

Reduced graphene oxide (FD-PURE-rGO series, available from NSC Co., Ltd., average particle size: 20.6 µm) was used as a carbon material.

### Evaluation

The carbon composite materials obtained in Examples 1-1 to 1-10 and Comparative Examples 1-1 to 1-2, the graphite powder obtained in Comparative Example 1-3, the graphene powder of Comparative Example 1-4, the graphene oxide obtained in Comparative Example 1-5, and the reduced graphene oxide obtained in Comparative Example 1-6 (hereinafter, the material used in Comparative Examples 1-3 to 1-6 is also simply referred to as a carbon material) were evaluated as follows. The results are presented in Table 1-1 and Table 1-2.

### (1) Counter cation concentration

The obtained carbon composite material was placed in a platinum crucible, incinerated, subjected to alkali melting, and dissolved in a hydrochloric acid solution. This was diluted with ultrapure water, and the cation of interest was quantitatively analyzed with an ICP emission spectrometer (available from Analytik Jena GmbH+Co. KG, model: PQ9000 Elite).

### (2) Dispersibility (content of carbon composite material or carbon material dispersed in supernatant)

0.30 g of the carbon composite material or the carbon material was put into 100.0 g of a mixed solvent of deionized water and 2-propanol (volume ratio: 60/40, pH (25°C): 5.7, electrical conductivity (25°C): 0.32 µS/cm). Subsequently, 100.0 g of the mixture treated for 3 minutes with an ultrasonic homogenizer (available from SMT Co., Ltd., model: UH-600S) was centrifuged with a centrifuge (available from Hitachi Koki Co., Ltd., model: R-22N, 1000 rpm, 10 minutes). Thereby, coarse particles were allowed to settle and then removed. 90.0 g of the obtained supernatant was dried at 100°C to volatilize the solvent. The weight of the obtained solid content was defined as the amount (g) of the carbon composite material or the carbon material dispersed in the supernatant. The content (%) of the carbon composite material or the carbon material dispersed in the supernatant was calculated from a ratio of the amount (g) of the carbon composite material or the carbon material dispersed in the supernatant to the amount (g) of the charged carbon composite material or carbon material. When the content of the carbon composite material or the carbon material dispersed in the supernatant is 15% or more, it can be said that the dispersibility is good.

### (3) Electrical conductivity of supernatant

The electrical conductivity of the supernatant after centrifugation treatment obtained in the evaluation of (2) was measured using an electrical conductivity meter (available from EUTECH, model: PC450, 25°C).

### (4) pH of supernatant

The pH of the supernatant after centrifugation treatment obtained in the evaluation of (2) was measured using a pH meter (available from HORIBA, Ltd., model: LAQUA D-210P, 25°C).

### (5) Long-term dispersibility (content and yield retention rate of carbon composite material or carbon material dispersed in supernatant after long-term storage)

90.0 g of the supernatant after centrifugation treatment obtained in the evaluation of (2) was allowed to stand for 48 hours, and then dried at 100°C to volatilize the solvent. The weight of the obtained solid content was defined as the amount (g) of the carbon composite material or the carbon material dispersed in the supernatant after long-term storage. The content (%) of the carbon composite material or the carbon material dispersed in the supernatant after long-term storage was calculated from the ratio of the amount (g) of the carbon composite material or the carbon material dispersed in the supernatant after long-term storage to the amount (g) of the charged carbon composite material or carbon material.

The yield retention rate was calculated from the ratio of the amount (g) of the carbon composite material or the carbon material dispersed in the supernatant after long-term storage to the amount (g) of the carbon composite material or the carbon material dispersed in the supernatant obtained in the evaluation of (2).

When the yield retention rate is 50% or more, it can be said that the long-term dispersibility is good.

### [Table 1-1]

**Table 1-1**

| | | Unit | Exam ple 1-1 | Exam ple 1-2 | Exam ple 1-3 | Exam ple 1-4 | Exam ple 1-5 | Exam ple 1-6 | Exam ple 1-7 | Exam ple 1-8 | Exam ple 1-9 | Exam ple 1-10 |
|---|---|---|---|---|---|---|---|---|---|---|---|---|
| Counter cation content concentration | | ppm by mass | 1214 5 | 4279 | 13415 | 7620 | 233 | 1723 | 1707 | 1300 | 1100 | 2267 |
| Electrical conductivity of supernatant (25°C) | | µS/c m | 58.2 | 24.9 | 63.8 | 36.8 | 2.2 | 8.4 | 4.3 | 6.0 | 4.8 | 22.9 |
| pH of supernatant (25°C) | | - | 7.9 | 7.3 | 8.0 | 7.4 | 6.0 | 6.4 | 8.2 | 7.3 | 7.2 | 6.7 |
| Dispersib ility | Content of carbon composite material or carbon material dispersed in supernatant | % | 31.2 | 29.2 | 28.8 | 31.3 | 36.8 | 59.5 | 55.9 | 40.3 | 44.5 | 56.7 |
| Long-term dispersib ility | Content of carbon composite material or carbon material dispersed in supernatant after long-term storage | % | 23.3 | 23.8 | 20.3 | 24.5 | 32.2 | 57.1 | 51.3 | 36.8 | 40.3 | 52.8 |
| | Yield retention rate | % | 74.7 | 81.5 | 70.5 | 78.3 | 87.5 | 96.0 | 91.8 | 91.3 | 90.6 | 93.1 |

### [Table 1-2]

**Table 1-2**

| | | Unit | Compar ative Example 1-1 | Compar ative Example 1-2 | Compar ative Example 1-3 | Compar ative Example 1-4 | Compar ative Example 1-5 | Compar ative Example 1-6 |
|---|---|---|---|---|---|---|---|---|
| Counter cation content concentration | | ppm by mass | 36467 | 27729 | - | - | - | - |
| Electrical conductivity of supernatant (25°C) | | µS/cm | 174.0 | 136.2 | 2.7 | 11.3 | 308.3 | 282.6 |
| pH of supernatant (25°C) | | - | 8.2 | 8.1 | 5.0 | 4.4 | 2.8 | 3.0 |
| Dispersib ility | Content of carbon composite material or carbon material dispersed in supernatant | % | 21.0 | 21.0 | 5.5 | <1 | 3.8 | <1 |
| Long-term dispersibi lity | Content of carbon composite material or carbon material dispersed in supernatant after long-term storage | % | 9.6 | 8.7 | 2.7 | <1 | 1.2 | <1 |
| | Yield retention rate | % | 45.7 | 41.4 | 49.1 | - | 31.6 | - |

It can be seen that the carbon composite materials of Examples 1-1 to 1-10 have good dispersibility when formed into a dispersion liquid and good dispersibility after long-term storage, and is less likely to re-aggregate.

### Second example: dispersion liquid

### Example 2-1

To 100.0 g of a mixed solvent of deionized water and 2-propanol (volume ratio: 60/40), an aqueous sulfuric acid solution was added to prepare a dispersion medium having a pH (25°C) of 5.1 and an electrical conductivity (25°C) of 2.4 µS/cm. To 100.0 g of the resulting dispersion medium, 0.30 g of the carbon composite material obtained in Example 1-5 was added, 100.0 g of the resultant treated with an ultrasonic homogenizer (available from SMT Co., Ltd., model: UH-600S) for 3 minutes was centrifuged with a centrifuge (available from Hitachi Koki Co., Ltd., model: R-22N, 1000 rpm, 10 minutes), and coarse particles were precipitated and removed to prepare a dispersion liquid of Example 2-1.

### Example 2-2

An aqueous potassium hydroxide solution was added to 100.0 g of a mixed solvent of deionized water and 2-propanol (volume ratio: 60/40) to prepare a dispersion medium having a pH (25°C) of 7.2 and an electrical conductivity (25°C) of 5.2 µS/cm. A dispersion liquid was prepared by the same method as in Example 2-1 using the obtained dispersion medium and the carbon composite material obtained in Example 1-5.

### Example 2-3

An aqueous potassium hydroxide solution was added to 100.0 g of a mixed solvent of deionized water and 2-propanol (volume ratio: 60/40) to prepare a dispersion medium having a pH (25°C) of 8.1 and an electrical conductivity (25°C) of 6.5 µS/cm. A dispersion liquid was prepared by the same method as in Example 2-1 using the obtained dispersion medium and the carbon composite material obtained in Example 1-5.

### Example 2-4

To 100.0 g of a mixed solvent of deionized water and 2-propanol (volume ratio: 60/40), an aqueous sulfuric acid solution and sodium chloride were added to prepare a dispersion medium having a pH (25°C) of 4.0 and an electrical conductivity (25°C) of 50.4 µS/cm. A dispersion liquid was prepared by the same method as in Example 2-1 using the obtained dispersion medium and the carbon composite material obtained in Example 1-5.

### Example 2-5

An aqueous potassium hydroxide solution was added to 100.0 g of a mixed solvent of deionized water and 2-propanol (volume ratio: 60/40) to prepare a dispersion medium having a pH (25°C) of 10.3 and an electrical conductivity (25°C) of 7.8 µS/cm. A dispersion liquid was prepared by the same method as in Example 2-1 using the obtained dispersion medium and the carbon composite material obtained in Example 1-5.

### Example 2-6

An aqueous potassium hydroxide solution was added to 100.0 g of a mixed solvent of deionized water and 2-propanol (volume ratio: 60/40) to prepare a dispersion medium having a pH (25°C) of 11.7 and an electrical conductivity (25°C) of 38.1 µS/cm. A dispersion liquid was prepared by the same method as in Example 2-1 using the obtained dispersion medium and the carbon composite material obtained in Example 1-5.

The pH of the dispersion medium obtained in each of Examples 2-1 to 2-6 at 25°C was measured using a pH meter (available from HORIBA, Ltd., model: LAQUA D-210P, 25°C). The electrical conductivity at 25°C was measured using an electrical conductivity meter (available from EUTECH, model: PC450, 25°C).

The dispersion liquids obtained in Examples 2-1 to 2-6 were used to perform the evaluation of (2), (3) and (5). The results are indicated in Table 2.

### [Table 2]

**Table 2**

| | | Unit | Examp le 2-1 | Examp le 2-2 | Examp le 2-3 | Examp le 2-4 | Examp le 2-5 | Examp le 2-6 |
|---|---|---|---|---|---|---|---|---|
| pH of dispersion medium (25°C) | | - | 5.1 | 7.2 | 8.1 | 4.0 | 10.3 | 11.7 |
| Electrical conductivity of dispersion medium (25°C) | | µS/cm | 2.4 | 5.2 | 6.5 | 50.4 | 7.8 | 38.1 |
| Electrical conductivity of supernatant (25°C) | | µS/cm | 4.3 | 7.2 | 8.7 | 38.9 | 9.7 | 31.1 |
| Dispersibil ity | Content of carbon composite material or carbon material dispersed in supernatant | % | 34.9 | 35.7 | 36.6 | 31.2 | 40.8 | 46.4 |
| Long-term dispersibili ty | Content of carbon composite material or carbon material dispersed in supernatant after long-term storage | % | 25.5 | 28.9 | 31.8 | 18.3 | 33.5 | 39.2 |
| | Yield retention rate | % | 73.1 | 80.9 | 86.9 | 58.7 | 82.1 | 84.5 |

From Table 2, it can be seen that the carbon composite material of the present disclosure has good dispersibility when formed into a dispersion liquid and good dispersibility after long-term storage, and is less likely to re-aggregate.

## Claims

1. A carbon composite material comprising:
a carbon material; and
a modifying group introduced into the carbon material,
wherein, when the carbon composite material is dispersed at a concentration of 0.3 mass% in a mixed solvent of deionized water and 2-propanol at a volume ratio of the deionized water:2-propanol = 6:4, an electrical conductivity of the dispersion liquid at 25°C is from 0.05 to 100.00 µS/cm.

2. The carbon composite material according to claim 1, wherein, when the carbon composite material is dispersed at a concentration of 0.3 mass% in a mixed solvent of deionized water and 2-propanol at a volume ratio of the deionized water:2-propanol = 6:4, a pH of the dispersion liquid at 25°C is from 5.1 to 8.6.

3. The carbon composite material according to claim 1 or 2, wherein the modifying group comprises an anionic functional group and a counter cation of the anionic functional group.

4. The carbon composite material according to claim 3, wherein the anionic functional group is at least one selected from the group consisting of a carboxy group, a carbonic acid group, a sulfonic acid group, and a phosphate group.

5. The carbon composite material according to claim 3 or 4, wherein the counter cation is at least one selected from the group consisting of a potassium ion, a sodium ion, a lithium ion, a barium ion, a calcium ion, a magnesium ion, a rubidium ion, and an ammonium ion.

6. The carbon composite material according to any one of claims 3 to 5, wherein a concentration of the counter cation contained in the carbon composite material is from 50 to 15000 ppm by mass.

7. The carbon composite material according to any one of claims 1 to 6, wherein the carbon material is graphene.

8. A dispersion liquid comprising the carbon composite material according to any one of claims 1 to 7 dispersed in a dispersion medium.

9. The dispersion liquid according to claim 8, wherein the dispersion medium has an electrical conductivity at 25°C of 70.0 µS/cm or less.

10. The dispersion liquid according to claim 8 or 9, wherein the dispersion medium has a pH at 25°C of from 4.8 to 10.0.
